# EUROPÄISCHE PATENTANMELDUNG

(11) **EP 1 850 050 A2**
(43) Veröffentlichungstag der Anmeldung: **31.10.2007**
(21) Anmeldenummer: 07008217.7
(22) Anmeldetag: 23.04.2007
(51) Int. Cl.: F16L 27/12, F16L 37/084

(54) **Kanalelemente für einen Kanal zum Führen von Strömungsmedien, Kabeln und dergleichen**

(30) Priorität: 26.04.2006 DE 202006006756 U
(71) Anmelder: Bürcher, Friedrich, 82054 Sauerlach (DE)
(72) Erfinder: Bürcher, Friedrich, 82054 Sauerlach (DE)
(74) Vertreter: Appelt, Christian W.

(57) **Zusammenfassung**

Es wird ein flexibel verlegbares Kanalsystem insbesondere zur Leitung von Luftströmen oder von Elektrokabeln beschrieben. Während bei Kanalsystemen zur Führung von Abluft, insbesondere von Küchenabluft, Kanalelementsätze angeboten werden, die aus einer Vielzahl von starren Einzelformen bestehen, beispielsweise aus Rundkanalstücken, Flachkanalstücken, Übergangsstücken, Bogenstücken usw., wobei insbesondere die Bogenstücke in verschiedenen Krümmungswinkeln, Krümmungsrichtungen und Krümmungsradien vorhanden sein müssen, um ein individuelles System für den Einbau bei den unterschiedlichsten baulichen Gegebenheiten zu ergeben, umfasst das erfindungsgemäße Kanalsystem universelle Kanalelemente (1,2,3) zur Bildung eines gebogenen geschlossenen Kanals, jeweils bestehend aus einem Rohrstück (4+5) mit an wenigstens einem der axialen Endbereiche des Rohrstücks sitzenden Kupplungselementen (7,8), die eine Überlappung der gekuppelten Endbereiche aneinandergefügter Kanalelemente bewirken, die dadurch gekennzeichnet sind, dass die Kupplungselemente (7,8) eine Koppelung der Kanalelemente (1,2,3) unter um den Umfang der Rohrstücke (4+5) unterschiedlicher Überlappungsweite ermöglichen, so dass die benachbarten Kanalelemente in einem kleinen Winkel ihrer Längsachsen zueinander angeordnet werden können, indem die Überlappung an der stumpferen Seite, die eine Bogenaußenseite wird, kleiner ist als an der spitzeren Seite, die eine Bogeninnenseite wird.

## Beschreibung

Die Erfindung bezieht sich auf zusammenfügbare Kanalelemente zur Bildung eines geschlossenen Kanals zum Führen von Strömungsmedien, Kabeln u. dgl., jeweils bestehend aus einem Rohrstück mit an wenigstens einem der axialen Endbereiche des Rohrstücks sitzenden Kupplungselementen, die eine Überlappung der gekuppelten Endbereiche aneinandergefügter Kanalelemente bewirken.

Bei Kanalsystemen zur Führung von Abluft, insbesondere von Küchenabluft, werden Kanalelementsätze angeboten, die aus einer Vielzahl von starren Einzelformen bestehen, beispielsweise Rundkanalstücken, Flachkanalstücken, Übergangsstücken, Bogenstücken usw. Insbesondere die Bogenstücke müssen in verschiedenen Krümmungswinkeln, Krümmungsrichtungen und Krümmungsradien vorhanden sein, um ein individuelles System für den Einbau bei den unterschiedlichsten baulichen Gegebenheiten zu ergeben.

Bei Kanalsystemen für Kabel, die zu Steckdosen geführt werden müssen, die sich beispielsweise im Hallenboden von Werkstätten befinden, werden überhaupt nur geradlinige Kanäle angeboten, so dass benachbarte, aber nicht auf einer geraden Linie liegende Steckdosenfelder nicht über einen gemeinsamen Kabelkanal angeschlossen werden können.

Eine Anwendungsmöglichkeit von zusammengesetzten Kanälen ergibt sich auch bei den Fall-Leitungen von Dachrinnen. Sind darin Bogenpartien vorhanden, so muss nach dem Stand der Technik ein Bogenstück eingefügt werden. Die Fall-Leitung ist auch unter Umständen zu lang für den Transport zur Baustelle und kann nur in Teillängen angeliefert werden, die dann gekuppelt werden müssen.

Wiederum bei Abluftkanälen, ergibt sich häufig die Notwendigkeit, sie zwischen einer Dunstabzugshaube und einem Mauerkasten auf der Oberseite von eingebauten Möbeln, beispielsweise von Küchenschränken, zu verlegen. Eine lose Verlegung ist aber unstabil und störanfällig. Schließlich liegt auch noch das Problem vor, dass Lüftergeräusche und Vibrationen sich vom Luftkanal auf den Schrank übertragen und dadurch verstärkt werden, besonders wenn im Schrank befindliche Gegenstände wie Geschirr in Resonanz geraten.

Durch die Erfindung sollen diese Schwierigkeiten vermieden werden. Gemäß der Erfindung sind die zusammenfügbaren Kanalelemente dadurch gekennzeichnet, dass die Kupplungselemente eine Koppelung der Kanalelemente unter um den Umfang der Rohrstücke unterschiedlicher Überlappungsweite ermöglichen. Hierdurch besteht die Möglichkeit, die benachbarten Kanalelemente in einem kleinen Winkel ihrer Längsachsen zueinander anzuordnen, indem die Überlappung an der stumpferen Seite, die eine Bogenaußenseite wird, kleiner ist als an der spitzeren Seite, die eine Bogeninnenseite wird.

Eine Möglichkeit, an gegenüberliegenden Kanalelementseiten unterschiedliche Überlappungsweiten zuzulassen, besteht darin, dass die Kupplungselemente am einen Endbereich des Rohrstücks nach außen verstehende Riegel und am anderen Endbereich des Rohrstücks nach innen vorstehende Riegel sind und im gekuppelten Zustand die nach innen vorstehenden Riegel die nach außen vorstehenden Riegel des benachbarten Kanalelements hintergreifen; oder darin, dass die Kupplungselemente am einen Endbereich des Rohrstücks nach außen oder innen vorstehende Klinken und am anderen Endbereich des Rohrstücks nach innen bzw. außen offene Mulden sind und im gekuppelten Zustand die vorstehenden Klinken in die Mulden des benachbarten Kanalelements eingreifen. Das Zusammenstecken der Elemente ist leicht möglich, wenn die Kupplungselemente durch elastische Verformung wenigstens von einem ihrer Rohrstücke in den hintergriffenen Zustand bringbar sind. Eine andere Möglichkeit besteht bei kreiszylindrisch runden Rohrstücken dadurch, dass die Riegel nur bestimmte Winkelbereiche belegen, zwischen denen größere freie Winkelbereiche liegen, und man dann die nach innen vorstehenden Riegel zwischen den nach außen vorstehenden Riegeln durchschiebt und anschließend die Rohrstücke gegeneinander verdreht.

Eine hinsichtlich der Verbindungsstabilität und Kanaldichtigkeit bevorzugenswerte Möglichkeit der Bogenbildung des Kanalverlaufs durch unterschiedliche Überlappungsweiten ergibt sich, wenn die Kupplungselemente einerseits an einem vom Ende des Rohrstücks innerhalb von dessen Wandstärke axial verlaufenden Ring-Hohlraum und andererseits wenigstens an einem vom Endbereich des Rohrstücks axial vorstehenden, in den Ring-Hohlraum des benachbarten Kanalelements einsteckbaren Einschubvorsprung sitzen, wobei der Ring-Hohlraum, ihn radial begrenzend, eine Außenwand und eine Innenwand hat; und wobei gemäß einer Spezialität im Ring-Hohlraum elastisch aufweitbare Engstellen vorhanden sind und der Einschub wenigstens eine nach außen und/oder innen vorstehende Verdickung aufweist, die im gekoppelten Zustand von die Engstellen begrenzenden Verdickungen des benachbarten Kanalelements hintergriffen werden.

Für die Bildung eines Bogens durch die erfindungsgemäßen Kanalelemente in einer im übrigen mit Kanalelementen nach dem Stand der Technik aufgebauten Installation benötigt man zumindest zwei als Verbindungsstücke zu bezeichnende erfindungsgemäße Kanalelemente, die einerseits in konventioneller Weise an das benachbarte starre Kanalelement anschließbar sind und andererseits die ungleichmäßig überlappenden Kupplungselemente aufweisen. Mit diesen beiden Elementen lässt sich ein Winkel bis zum maximalen Biegewinkel zwischen benachbarten erfindungsgemäßen Kanalelementen erreichen. Für größere Winkel müssen zwischen diese Verbindungsstücke noch als Biegeelemente zu bezeichnende erfindungsgemäße Kanalelemente eingesetzt werden, die beiderseits solche Kupplungslemente haben. Die erfindungsgemäßen Kanalelemente umfassen also Verbindungsstücke und Biegeelemente.

Die einzelnen Kanalelemente können relativ kurz sein, um einen Bogen mit eher kleinem Radius zu bilden. Soweit sie Biegeelemente sind, sind sie vorzugsweise axial unterteilt in einen Steckteil und einen Muffenteil, wobei der Muffenteil einen Innenquerschnitt hat, der größer ist als der Außenquerschnitt des Steckteils. Es wird also jeweils der Endbereich des Muffenteils über den Endbereich des Steckteils geschoben und so zwischen den Verbindungsstücken eine unter Umständen auch längere Folge von Biegeelementen eingefügt, die einen beliebig im Bogen verlaufenden oder auch serpentinenförmigen Kanal bilden. Natürlich kann man mit den erfindungsgemäßen Kanalelementen auch gerade Strecken verlegen, sie haben dann einen teleskopartig längenjustierenden Effekt. Dies ist z.B. beim Anschluss an einen Mauerkasten von Bedeutung, bei dem man die übliche Teleskopkonstruktion zur Anpassung an unterschiedliche Mauerstärken nicht mehr benötigt, sondern die Justierung durch gerade verlegte Biegeelemente durchführt, deren Überlappung man passend wählt. Der Mauerkasten selbst kann, anstelle einer Teleskopkonstruktion, mit einer Kette von erfindungsgemäßen Kanalelementen versehen sein, die die Anpassung an die Mauerstärke ermöglichen. Für längere gerade Kanalstrecken kann aus Kostengründen ein langes starres Kanalelement von Nutzen sein, das an seinen Enden Anschlüsse für Biegeelemente aufweist. Auch andere spezielle Teile des herkömmlichen Lüftungskanals, wie z. B. Anpassungsstücke zwischen unterschiedlichen Querschnittsformaten oder z.B. Verzweigungsstücke, können mit einer solchen Kette von erfindungsgemäß bogenförmig verlegbaren oder in die Länge ziehbaren Kanalelementen versehen sein. Im übrigen sollen die Kanalelemente vorzugsweise aus einem schwer entflammbaren Material bestehen, das so fest ist, dass der Kanal betretbar ist. Für die Steckteile und die Muffenteile kann die Materialwahl zweckmäßigerweise so sein, dass der Steckteil aus einem weichen Material, z.B. einem Plastomer, und der Muffenteil aus einem haarten Material, z.B. PVC, besteht, die mit Hilfe der bekannten Zweispritztechnik gemeinsam verarbeitet werden können.

Um die Möglichkeiten der Bogenbildung noch zu erweitern und insbesondere Bögen mit sehr kleinem Radius schaffen zu können, bestehen noch die Möglichkeiten, dass bei der Konstruktion mit Ring-Hohlraum, der, ihn radial begrenzend, eine Außenwand und eine Innenwand hat, die Außenwand zumindest entlang einem Teil des Umfangs, der beim gekrümmten Zusammenbau im Bereich der Bogen-Innenseite liegt, gegebenenfalls auch über den gesamten Umfang, in axialer Längsrichtung kürzer als die Innenwand an dieser Stelle ist, und/oder dass zumindest einige Rohrstücke eines Systems zumindest über einen Teil ihrer Länge, insbesondere in ihrem Einschubvorsprung, in Axialrichtung gewellt und hierdurch auch elastisch in sich besser biegbar sind.

Aufgrund der Möglichkeit der Bogenbildung muss ein Sortiment für eine Kanalmontage nur folgende Elemente umfassen: starre gerade Kanalelemente, Biegeelemente mit mit unterschiedlicher Überlappungsweite kuppelbaren Kuppelelementen, und Verbindungsstücke zwischen den geraden starren Kanalelementen und den Biegeelementen, wobei, wenn die Rohrstücke der Biegeelemente aus einem Steckteil und einem Muffenteil bestehen, das Sortiment zwei Arten von Verbindungsstücken umfasst, nämlich solche mit einem Muffenteil zum Anschließen des Steckteils eines Biegeelements, und solche mit einem Steckteil zum Anschließen des Muffenteils eines Biegelements. Für die Errichtung einer Flachkanal-Abluftabzugsinstallation benötigt das Sortiment weiterhin wenigstens einen Mauerkasten und wenigstens ein Formatübergangsstück zum Anschluss an den runden Anschlussstutzen einer Luftabzugshaube. Die Kanalelemente können auch in an sich bekannter Weise eingebaute Filterkassetten enthalten. Insgesamt ist ersichtlich, dass die Zahl der benötigten Teile im Vergleich zu den Sortimenten nach dem Stand der Technik erheblich reduziert ist.

Zur Festlegung der Kanalelemente an einem Trägersubstrat oder Untergrund wie einer Möbeloberseite, einer Wand oder Decke oder einer sonstigen Installation am Umfang des einzelnen Rohrstücks entweder eine zweckmäßigerweise bei der Herstellung mit angespritzte Befestigungslasche für die Befestigung am Trägersubstrat angebracht, oder ist am Umfang des einzelnen Rohrstücks ein Befestigungselement zum Ankoppeln einer Befestigungslasche für die Befestigung an einem Trägersubstrat angebracht. Die Befestigungslasche, die flexibel oder eine starre Schiene sein kann, erlaubt ein Anschrauben, Annageln, Ankleben oder eine sonstige Befestigung des Kanalelements, das dadurch ohne großen Aufwand vielfältig verlegbar ist und gegen ein Verschieben, Verrutschen usw. gesichert ist. Gemäß einer zweckmäßigen und den Gegebenheiten gut anpassbaren Konstruktion ist die Befestigungslasche ein länglicher Streifen, der entlang seiner Länge mehrere Punkte zum wahlweisen Ankoppeln am Befestigungselement des Kanalelements hat, so dass man die Befestigungslasche vom Rohrstück auf einer oder auf der anderen Seite länger vorstehen lassen kann. Eine bevorzugte Konstruktion ist hierbei die, dass das Kanalelement eine in der Wand des Rohrstücks gebildete, im Querschnitt schwalbenschwanzförmige Nut umfasst, in die der Befestigungsstreifen lösbar eingesetzt ist, wobei die Nut tangential in der Wand des Rohrstücks verläuft. Diese Form ist sowohl spritzgussmäßig als auch funktionell sehr günstig.

Da die kurzen verbundenen Kanalelemente möglicherweise zu lärmerzeugenden Eigenbewegungen neigen, sind vorzugsweise am einzelnen Kanalelement außen die Schallübertragung zur Unterlage dämpfende Auflagepolster z.B. aus Styropor, Gummi, Filz, Schallschutzmatte usw. angebracht, wodurch durch eine solche Übertragung bewirkte Belästigungen vermieden werden, und kann wenigstens eines der Rohrstücke einer Kanalinstallation in einem Bereich beiderseits eines quer zur Strömungsrichtung im Kanal liegenden Rohrquerschnitts, der gegebenenfalls auch das gesamte Rohrstück umfasst, aus einem schalldämmenden Material bestehen, so dass z.B. von einem am Kanalende sitzenden Gebläse erzeugter Schall nicht über die Kanalelemente zum anderen Kanalende übertragen wird. Insbesondere kann ein ganzes Kanalelement aus dem schalldämmenden Material bestehen, z.B. aus Styropor. Weiterhin können die Kanalelemente isoliert sei, als "Iso-Rohr" oder "Iso-Kanal", z.B. mit Glaswolle, Schaumstoff oder anderen Materialien. Eine Isoliermatte wird um den Kanal herumgelegt, dann kommt außen eine Folie darüber.

Im Gegensatz zu einem Schlauch, etwa bei einer Absaugung, bietet ein flexibler Kanal aus den erfindungsgemäßen Kanalelementen auch den Vorteil, relativ unempfindlich gegen im Saugstrom mitgeführte spitze Teile, Steine usw. zu sein. Der Kanal kann auch auf kleinen Rollen befestigt sein, damit man bei beweglichen Maschinen den Kanal und die Kabelführung mit bewegen kann. Beim Bewegen einer Saugdüse oder einer Saugmaschine setzt dann der Saugkanal oder der Kabelkanal keinen nennenswerten Widerstand entgegen.

Sollen zwei Rohrstücke z.B. auf den Elementenseiten mit dem Ring-Hohlraum oder Rohrstücke ohne spezielle endseitige Kupplungselemente, z.B. gewellte Aluminiumkanalstücke, zur Bildung eines geschlossenen Kanals verbunden werden, so wird nach einem speziellen Aspekt der Erfindung eine dem Umfang der Rohrstücke angepasste Verbindungs- oder Kuppelmuffe zum Koppeln der beiden Rohrstücke zur Verfügung gestellt, die aus einem federnden Material besteht, entlang einer Längslinie geteilt und auffederbar ist und im zusammengedrückten Zustand gegen ein Auffedern arretierbar ist. In diese Kuppelmuffe können, solange sie aufgefedert, also radial auseinandergebogen ist, die Rohrstückenden ohne Schwierigkeit eingesteckt werden, woraufhin sie auf die Rohrstückenden zurückgefedert und dort arretiert wird. Die Feder-Ruhestellung kann zweckmäßigerweise im geschlossenen, aufgrund der Arretiermöglichkeit aber auch im geöffneten Zustand liegen. In für vollgeschlossene Kuppelmuffen an sich bekannter Weise ist vorzugsweise auch die erfindungsgemäße Kuppelmuffe an ihrer Innenseite mit einem Dichtungsbelag versehen. Die erfindungsgemäße Kuppelmuffe kann nach einer weiterentwickelten Ausführungsform wenigstens einen in ihren Innenraum vorstehenden Vorsprung aufweisen, der die Einschubweite des vom jeweiligen Muffenende eingeschobenen Rohrstücks begrenzt, und es kann, ebenfalls nach einer weiterentwickelten Ausführungsform, der auffedernde Umfangsbereich der Kuppelmuffe in seinem Mittelbereich in seiner Querrichtung durchschnitten und dadurch in zwei getrennt auffederbare Flügel getrennt sein, wobei dann die Kuppelmuffe bei Lieferung der Rohrstücke bereits mit einer Hälfte auf das Rohrstückende montiert sein kann und nur die andere Hälfte zum Einlegen des anderen Rohrstückendes aufgebogen wird.

Als nächstliegende Einsatzmöglichkeit für die erfindungsgemäßen Kanalelemente werden Luftleitungen insbesondere zur Küchenentlüftung genannt. Tatsächlich sind sie jedoch sehr vielseitig einsetzbar, z.B. in der Elektroindustrie, im Elektrobereich, bei der E-Verkabelung, im Kabelschutzbereich, in der Elektroinstallation, der Kabelverlegung, der Computer-Vernetzung, der Maschinen-Industrie, im Maschinenbau, im Industrieanlagenbau, in der Automatisierungstechnik, im Industriebau sowie im Haus-, Hoch- und Tiefbau, in der Möbel- und Küchenindustrie, bei der Küchenabluft, in der Lüftungs-, der Automobil- und der Holzindustrie, in Schreinereien, im Rohrleitungsbau, für die Büro-Verkabelung, im Sanitärwesen, im Heizungsbau, beim Heißlufttransport, im Schiffbau, bei Absauganlagen, in der Kältetechnik, für lüftungstechnische Anlagen mit Abluft, Zuluft, Umluft usw.

Weitere Einzelheiten, Vorteile und Weiterbildungen der Erfindung ergeben sich aus der folgenden Beschreibung bevorzugter Ausführungsformen unter Bezugnahme auf die Zeichnung. Es zeigen:
- Fig. 1: in perspektivischer Darstellung eine Bogenpartie eines Flachkanals;
- Fig. 2: in einer schematischen Längsschnittdarstellung die Funktion der Bogenbildung;

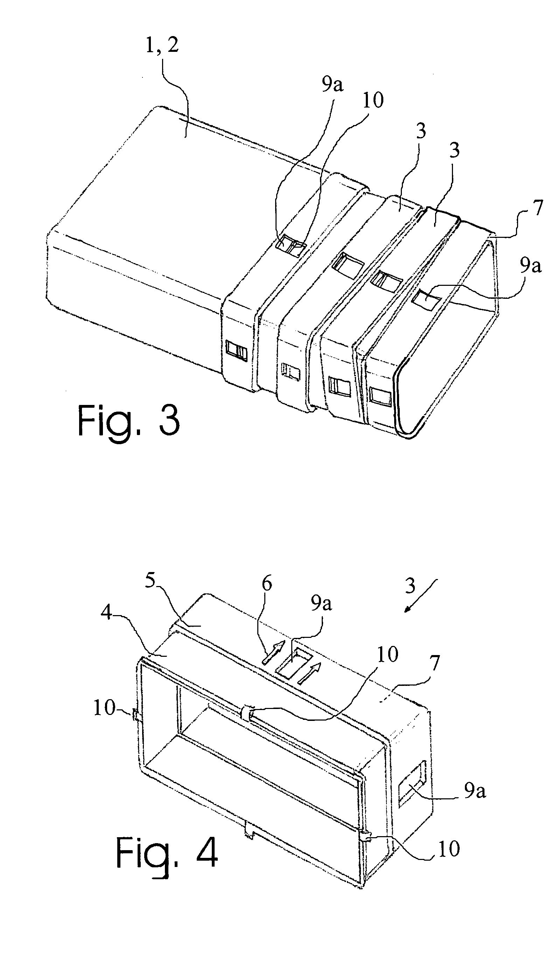

- Fig. 3: in perspektivischer Darstellung eine Bogenpartie eines Flachkanals aus Kanalelementen einer abgewandelten Ausführungsform;
- Fig. 4: in perspektivischer Darstellung eines der Kanalelemente des Flachkanals von Fig. 3;
- Fig. 5: in schematischer perspektivischer Darstellung die Anwendung des im Bogen verlegten Flachkanals in einer Küchen-Abluftinstallation;
- Fig. 6: in schematischer perspektivischer Darstellung die Anwendung des im Bogen verlegten Flachkanals in einer Stromversorgungsinstallation;
- Fig. 7: eine Schnittdarstellung entsprechend dem oberen Teil von Fig. 2 unter Darstellung einer abgewandelten Ausführung zur Erzielung eines noch kleineren Bogenradiusses;
- Fig.: 8 eine perspektivische Darstellung eines Rundkanal-Rohrstücks mit der Besonderheit der Ausführungsform von Fig. 7;
- Fig. 9: in perspektivischer Darstellung eine abgewandelte Ausführungsform eines Biegeelements;
- Fig. 10: eine weitere abgewandelte Ausführungsform des Biegeelements;
- Fig. 13: in perspektivischer Darstellung zur Bogenbildung zusammenfügbare Kanalelemente eines Flachkanals;
- Fig. 14: in perspektivischer Darstellung zur Bogenbildung zusammenfügbare Kanalelemente eines Rundkanals;

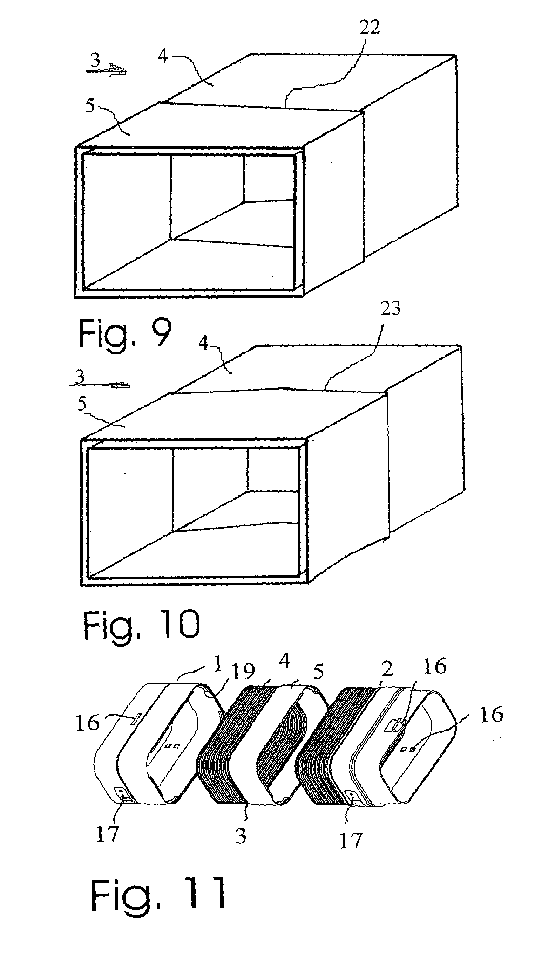

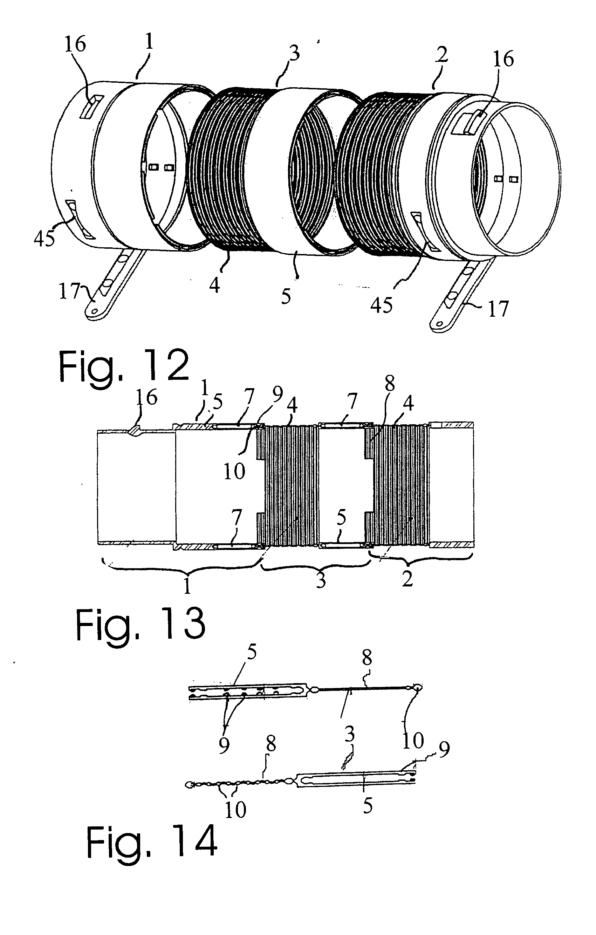

- Fig. 13: einen Längsschnitt durch die zusammengefügten Kanalelemente nach Fig. 10;
- Fig. 14: Längsschnitte durch die Wände von bogenbildenden Kanalelementen;
- Fig.n 15 und 16: einen Längsschnitt durch Kanalelemente mit profiliertem Steckteil;

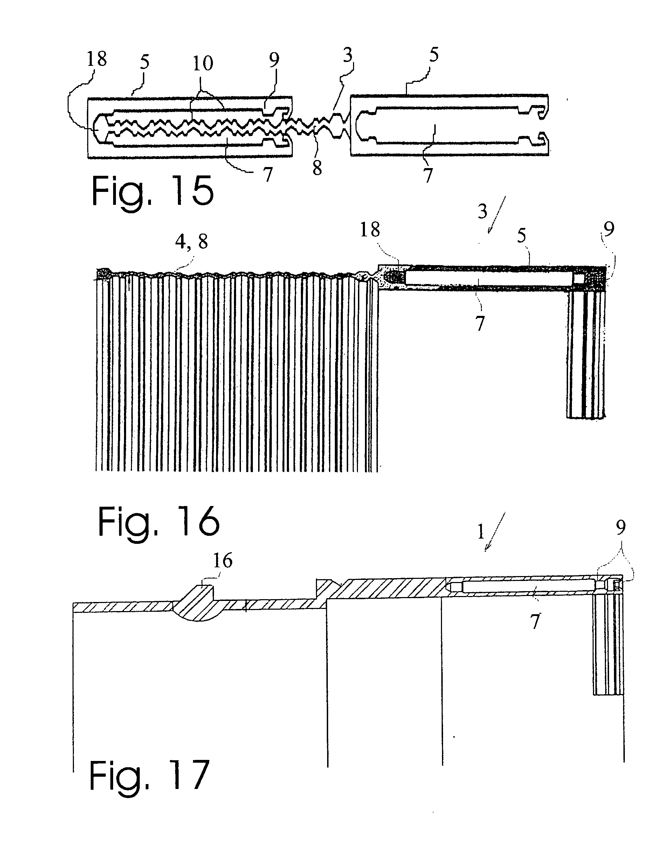

- Fig. 17: einen Längsschnitt durch ein Verbindungsstück, nämlich durch ein gerades Kanalelement zum Anschluss eines bogenbildenden Kanalelements;

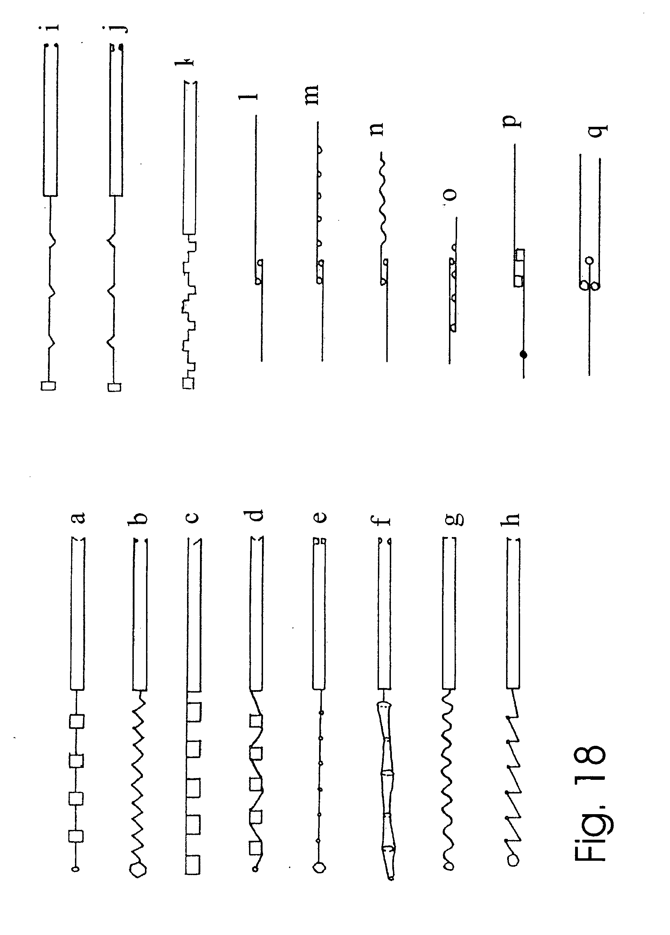

- Fig. 18: in verschiedenen schematischen Schnittdarstellungen Möglichkeiten für die Verbindung zweier in einem Achsenwinkel verlegbarer Kanalelemente;

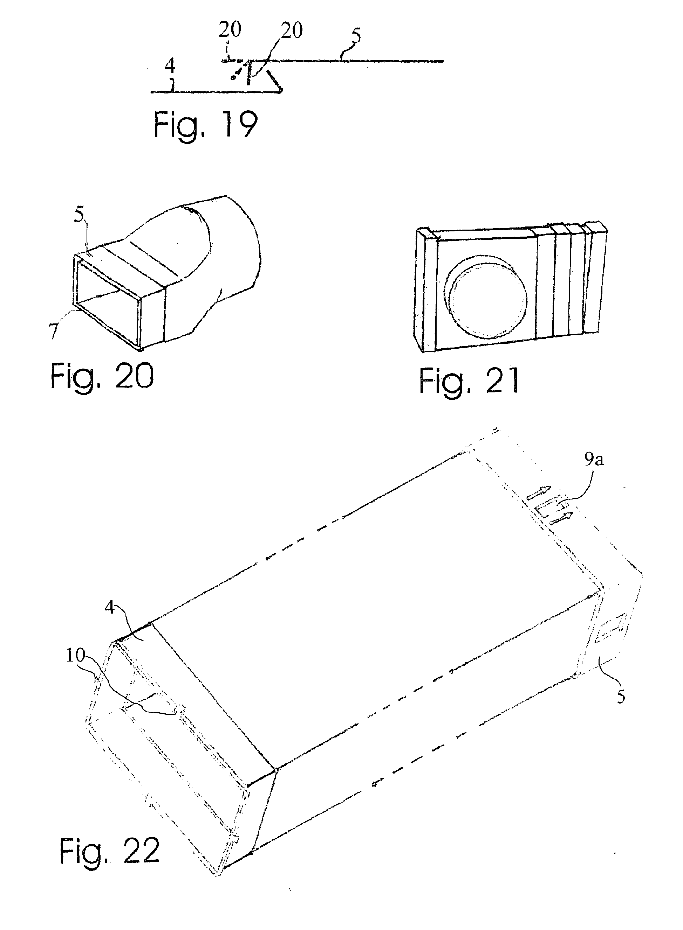

- Fig. 19: in schematischer Schnittdarstellung eine Bauart zur möglichen leichten Trennung der Kanalelemente;
- Fig. 20: eine perspektivische Ansicht eines Kanalformat-Übergangsstücks zum Anschluss eines bogenbildenden Kanalelements;
- Fig. 21: eine perspektivische Ansicht eines Kanal-T-Stücks zum Abzweig eines Rundkanals, mit daran angeschlossenen bogenbildenden Kanalelementen;

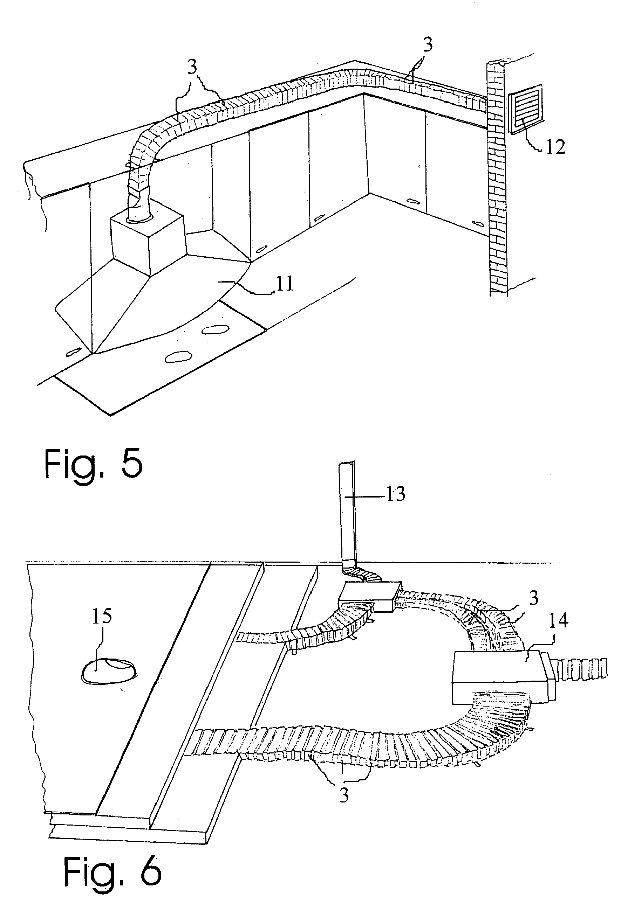

- Fig. 22: eine perspektivische Ansicht eines starren Flachkanalelements mit Endgestaltungen zum Anschluss von bogenbildenden Kanalelementen nach Fig. 4;

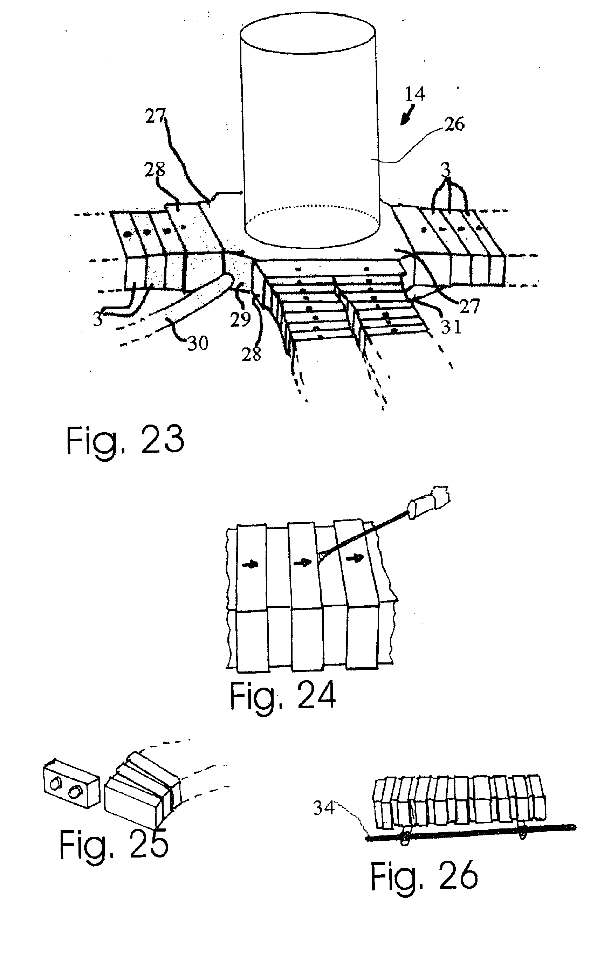

- Fig. 23: in perspektivischer Darstellung einen mehrfach angeschlossenen Unterflur-Anschlusskasten für elektrische Anschlüsse;
- Fig. 24: einen Ausschnitt einer Kanalelement-Kette mit angesetztem Schraubenzieher zum Auftrennen der Kette;
- Fig. 25: das Ende eines im Bogen verlaufenden Flachkanals mit einem Abschlussdeckel;
- Fig. 26: einen Flachkanal mit daran befestigtem Kabel;

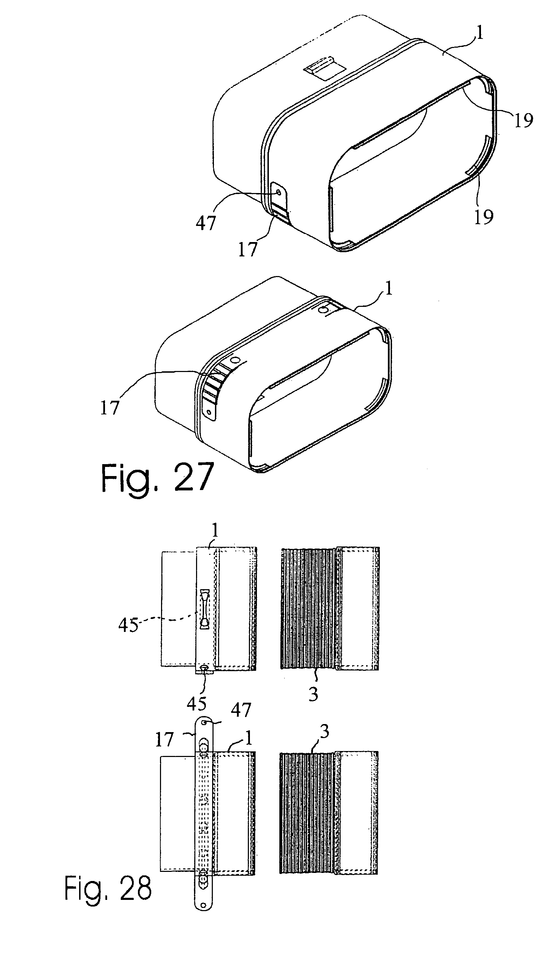

- Fig. 27: in perspektivischer Darstellung ein Flachkanal-Verbindungsstück mit einer Befestigungslasche, von zwei Seiten aus gesehen;
- Fig. 28: ein Rundkanal-Verbindungsstück, von unten gesehen in zwei Darstellungen mit bzw. ohne die bei dieser Ausführung ein separates Bauteil bildende Befestigungslasche, jeweils unter zusätzlicher Darstellung des damit zusammenfügbaren bogenbildenden Biegeelements;

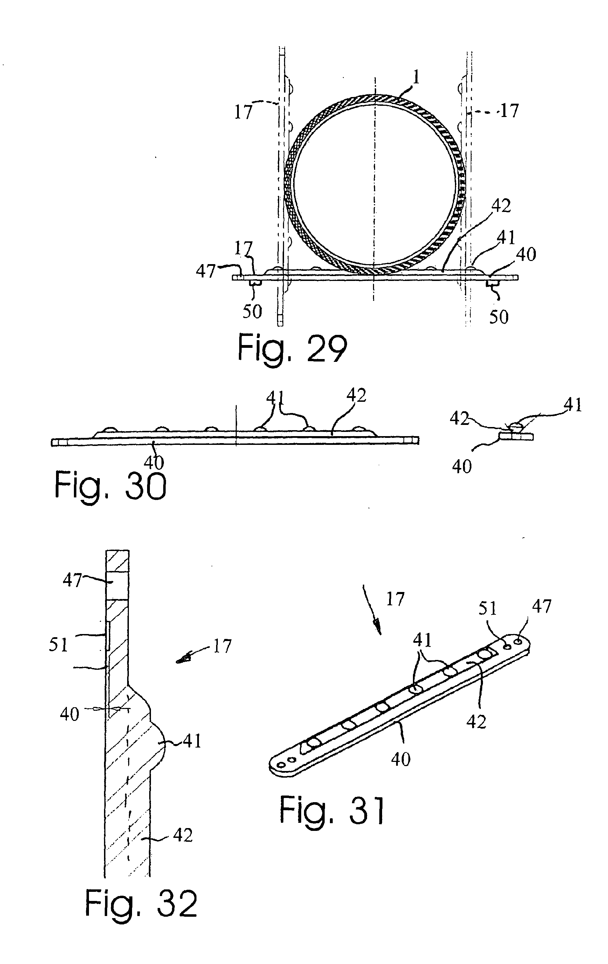

- Fig. 29: einen Querschnitt durch das Verbindungsstück von Fig. 28 mit Darstellung der Befestigungslasche in drei verschiedenen Positionen;
- Fig. 30: die Befestigungslasche von Fig. 29 in Seitenansicht und Stirnansicht;
- Fig. 31: die Befestigungslasche in perspektivischer Darstellung;
- Fig. 32: einen Längsschnitt durch den Endbereich der Befestigungslasche von Fig.n 30 und 31;

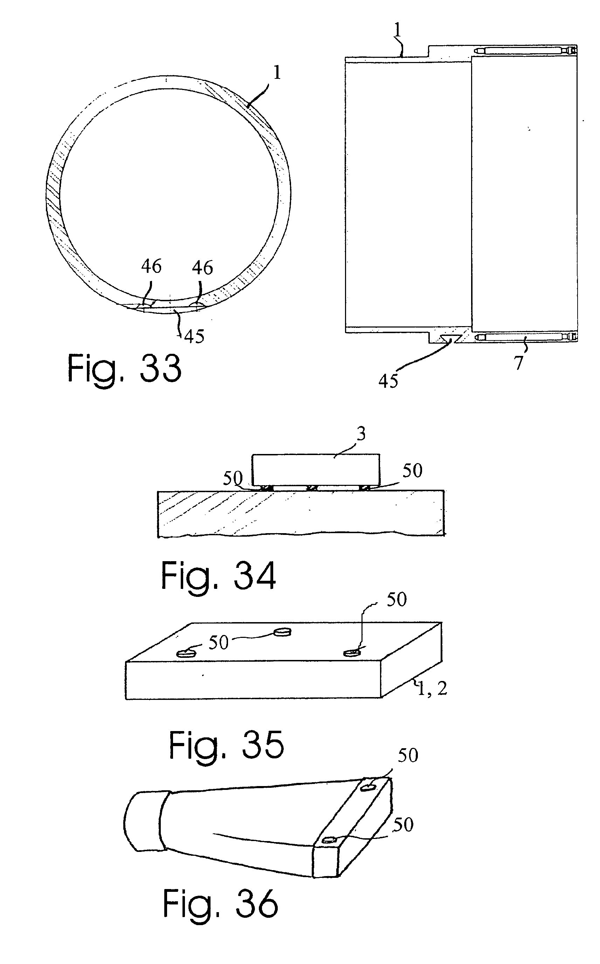

- Fig. 33: einen Querschnitt durch das Kanalelement von Fig. 28 in einer den Anbringungsort der Befestigungslasche schneidenden Schnittebene;
- Fig. 34: in schematischer Seitenansicht die Auflage eines Luftkanals auf einer Unterlage über Auflagepolster;
- Fig. 35: in perspektivischer Darstellung ein Flachkanal-Kanalelement mit Auflagepolstern, auf seine Unterseite gesehen;
- Fig. 36: in perspektivischer Darstellung ein Rundkanal-Flachkanal-Übergangselement mit Auflagepolstern;

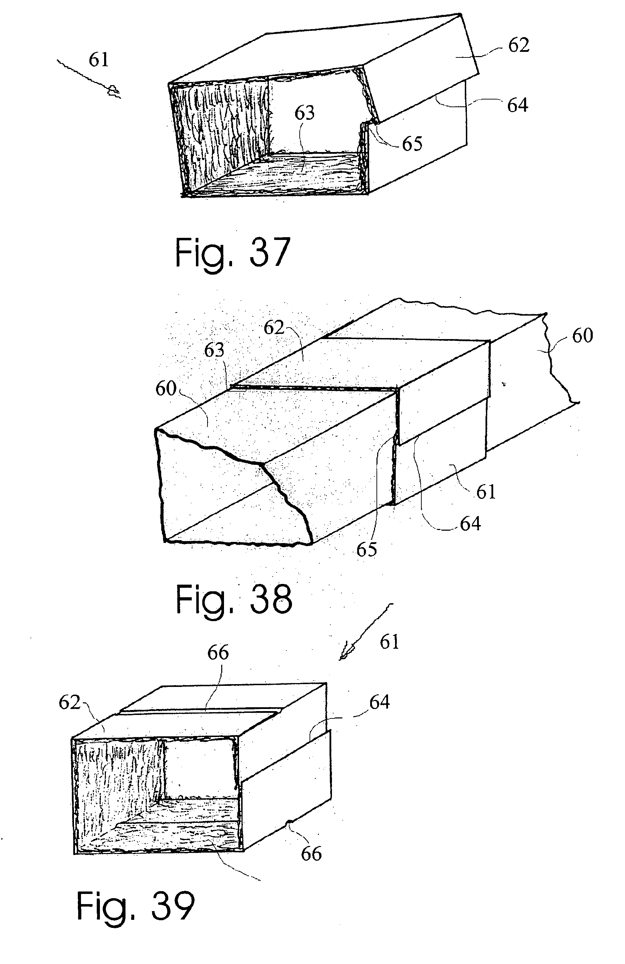

- Fig. 37: in perspektivischer Darstellung eine Kanalelement-Kuppelmuffe;
- Fig. 38: in perspektivischer Darstellung zwei durch die Kuppelmuffe von Fig. 37 verbundene Rohrstückenden;
- Fig. 39: eine abgewandelte Ausführungsform der erfindungsgemäßen Kuppelmuffe;

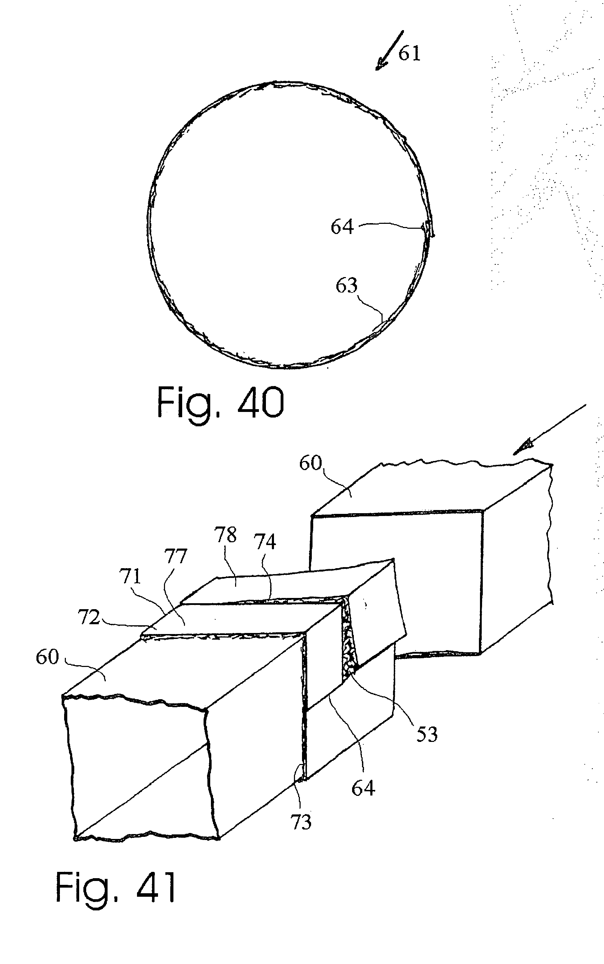

- Fig. 40: die Kuppelmuffe in der Ausführung für einen Rundkanal;
- Fig. 41: eine weiterhin abgewandelte Ausführungsform der Kuppelmuffe.

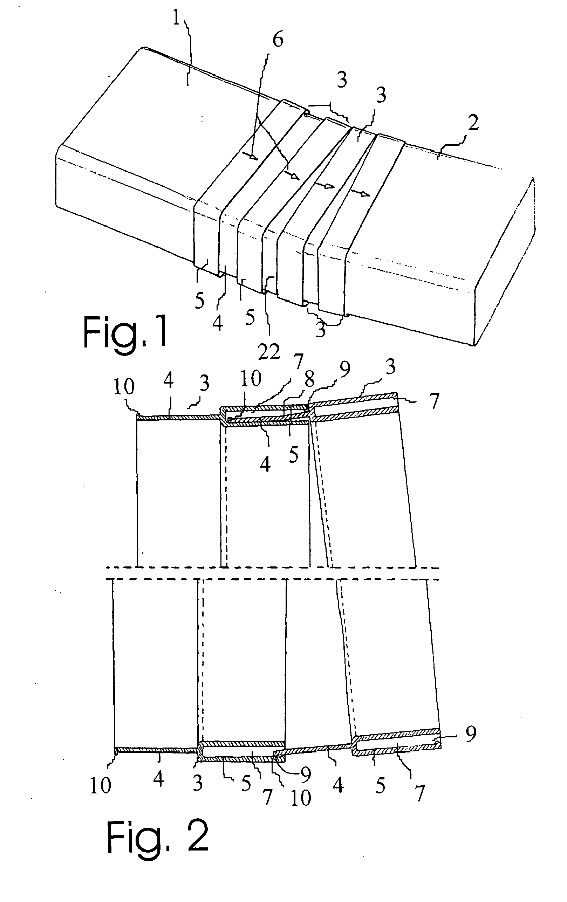

Fig. 1 zeigt einen Bogen- oder Winkelbereich eines geschlossenen Flachkanals, der beispielsweise ein Küchenabluftkanal oder auch ein Kabelkanal sein kann. Zwischen zwei geraden Kanalelementen, die an beiderseits gerade verlaufende Kanalstrecken anschließen und die als Verbindungsstücke 1 und 2 bezeichnet werden, liegen drei bogenbildende Kanalelemente, die als Biegeelemente 3 bezeichnet werden und miteinander und mit den Verbindungsstücken jeweils unter einem Winkel ihrer Längsachsen gekuppelt werden können. Während bei der dargestellten Konfiguration das an das Verbindungsstück 1 anschließende Biegeelement mit diesem noch koaxial verbunden ist, sind die Biegeelemente 3 untereinander und das an das Verbindungsstück 2 anschließende Biegeelement jeweils mit einem Winkel ihrer Längsachsen verbunden. Wenn nur ein kleiner Winkel gebildet werden soll, können die beiden Verbindungsstücke 1 und 2 unmittelbar, ohne Zwischenschaltung von Biegeelementen 3, gekoppelt werden, für größere Winkel werden ein oder mehrere Biegeelemente 3 einbezogen. Zwei Biegeelemente können zueinander bzw. zu einem Verbindungsstück jeweils mit einem wählbaren Winkel bis zu einem Maximalwinkel, der beispielsweise bei 10 Grad liegen kann, verlegt werden, und durch Hintereinanderreihung mehrerer Biegeelemente können beliebige Bogenwinkel dargestellt werden. In der Fig. 1 sind die Biegeelemente nur in der flachen Ebene des Flachkanals verwinkelt, die Biegung kann aber auch in der hierzu um 90 Grad gedrehten Ebene erfolgen, also aus der flachen Ebene herausführen.

Jedes Biegeelement 3 besteht aus einem Steckteil 4 und einem Muffenteil 5, die zusammen ein Rohrstück bilden und koaxial zueinander hintereinander angeordnet sind. Der Steckteil 4 des einen Elements ist in den Muffenteil 5 des anderen Elements um eine in gewissem Maß wählbare Weite einschiebbar, und zwar kann die Einschiebeweite um den Umfang der Elemente unterschiedlich gewählt und jeweils festgelegt werden, wodurch sich der Winkel der Längsachsen ergibt. Von den in Fig. 1 dargestellten Verbindungsstücken 1 und 2 ist das Verbindungsstück 1 ein Außen-Verbindungsstück, das ein Anschlussstück zum geraden Kanal und einen Muffenteil 5 umfasst, in das der Steckteil 4 des angeschlossenen Biegeelements 3 eingesteckt und dort arretiert ist, und ist das Verbindungsstück 2 ein Innen-Verbindungsstück, das ein Anschlussstück zum geraden Kanal und einen Steckteil 4 umfasst, das in den Muffenteil des angeschlossenen Biegeelements 3 eingesteckt und dort arretiert ist. Die Arretierung ist für einen fest zu verlegenden Kanal nützlich, aber nicht absolut notwendig. Für einen Kanal, der flexibel bleiben soll, hat die Arretierung zu unterbleiben, beispielsweise für einen einer am Boden bewegten Maschine laufend folgenden Kanal.

Pfeile 6 auf dem Muffenteil 5 zeigen sowohl die bevorzugte Strömungsrichtung im Kanal, als auch einen Angriffspunkt für ein Werkzeug zum Lösen der Steckverbindung an (Fig. 24).

Eine Möglichkeit der verwinkelten Verbindung zwischen einem Steckteil und einem Muffenteil ist für ein elastisch biegsames Material in Fig. 2 dargestellt. Das aus dem Steckteil 4 und dem Muffenteil 5 bestehende Rohrstück des Biegeelements 3 weist beiderseits Kupplungslemente auf, nämlich einerseits im Muffenteil 5 einen innerhalb der Wandstärke des Muffenteils axial verlaufenden Ring-Hohlraum 7 und andererseits einen oder mehrere am axialen Endbereich des Steckteils 4 sitzende oder auch, wie in der Zeichnung dargestellt, den gesamten Steckteil ausmachende in den Ring-Hohlraum 7 einsteckbare Einschübe 8. Der Ring-Hohlraum 7 hat an seiner Mündung - oder auch noch zusätzlich gemäß später beschriebenen Ausführungsformen (Fig. 14) entlang seiner axialen Ausdehnung - ihn verengende Vorsprünge 9, und der Einschub oder die entlang dem Umfang axial vorstehenden Einschübe 8 haben radiale Vorsprünge 10, die an den Vorsprüngen 9 Halt finden - bzw. bei den weiteren Aufführungsformen (Fig. 14) sich in Zwischenräume zwischen jeweils zwei Vorsprüngen 9 legen. Die Vorsprünge 9 können beispielsweise in Umlaufrichtung erstreckte, unterbrochene Rippen sein, und die Vorsprünge 10 können Noppen oder, wie in der Zeichnung dargestellt, umlaufende Wellungen sein.

Die Fig.n 3 und 4 zeigen als Elementenkette bzw. als Einzelelement abgewandelte Biegelemente 3, bei denen die Vorsprünge 10 hakenförmig sind und die Gegenvorsprünge, 9 in Fig. 1, durch Mulden 9a ersetzt sind, die sich in der Wand des Muffenteils befinden. In der Zeichnung sind die Mulden als offene Fenster dargestellt, nach einer abgewandelten Ausführung können sie aber auch auf der Außenseite geschlossen, also abgedeckt sein. Die Verbindung und Trennung der Elemente erfolgt in analoger Weise wie die Verbindung und Trennung der Elemente 3 von Fig.n 1 und 2.

Fig. 5 zeigt schematisch eine Küchen-Abluftinstallation von einer Dunstabzugshaube 11 zu einem Mauerkasten 12, wobei die Länge des Abluftkanals aus Biegelementen 3 aufgebaut ist. Zur Veranschaulichung der vielseitigen Anwendbarkeit der Biegelemente 3 zeigt weiterhin Fig. 6 eine Unterboden-Elektroinstallation, ausgehend von einem wandseitigen handelsüblichen Elektrokanal 13 zu einer Unterboden-Anschlussdose 14 und einer Geräteeinbaueinheit mit Teppichschutzrahmen 15. Die Bodenschichten, nämlich Isolierung, Estrich und Bodenbelag, sind in der Darstellung zur besseren Veranschaulichung stufenweise weggenommen. Das Beispiel zeigt die Vorteile einer Verwendung von Biegeelementen 3 für die Herstellung der Kabelkanäle, die nach dem Stand der Technik nur in Form gerader Kanäle existieren. Die Verlegung kann also ohne Probleme in Anpassung an die Gegebenheiten und Erfordernisse der Örtlichkeit vorgenommen werden, auch für Nachrüstungen sind keine großen Umräumungen nötig, da der Kabelkanal bei Bedarf sogar in Schlangenlinien die freien Flächen in Anspruch nehmen kann.

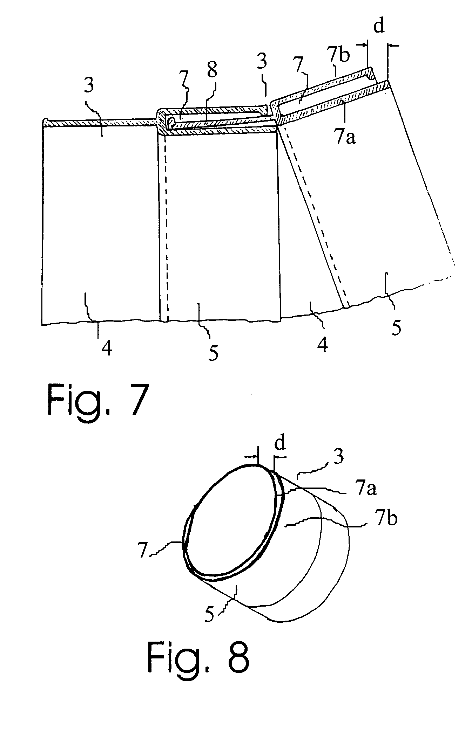

Die Fig.n 7 und 8 zeigen im Schnitt, bzw. perspektivisch für einen Rundkanal, eine Möglichkeit, für Verbindungsstücke und Biegelemente mit Ring-Hohlraum den Bogenradius noch zu verkleinern. Der Ring-Hohlraum 7 wird radial durch eine Innenwand 7a und eine Außenwand 7b begrenzt. Entweder rund um den Umfang, oder, wie in Fig. 8 gezeigt, beispielsweise um den halben Umfang oder - bei rechteckigem Kanalquerschnitt - entlang einer Kante und beiderseits unmittelbar daran anschließenden Bereichen, ist der Rand der Außenwand 7b gegenüber dem Rand der Innenwand 7a um eine Länge d zurückgesetzt, die, wie Fig. 7 zeigt, im Vergleich zur Bemessung von Fig. 2 eine stärkere Neigung der Elemente gegeneinander ermöglicht. Allerdings werden hierbei an die Verformbarkeit des Steckteils 4 höhere Anforderungen gestellt. Bei dem in Fig. 8 dargestellten Rundkanal-Biegeelement ist die Außenwand 7b gegenüber der Innenwand 7a an einer Stelle um die Länge d zurückgesetzt, die dann bei der Zusammenfügung an der Bogen-Innenseite liegen soll, und das Maß der Zurücksetzung nimmt von dieser in der Zeichnung oben dargestellten Stelle beiderseits jeweils um einen Viertelumfang bis auf null ab, so dass also in der unten dargestellten Elementenhälfte die Wände 7a und 7b wieder axial gleich lang sind und ihre Ränder einen gleichmäßigen Ringspalt einschließen.

Die Fig.n 9 und 10 zeigen nochmal zwei Ausführungsformen von Biegeelementen 3, die die Möglichkeit zu einer noch stärkeren Biegung des Kanals bieten. In gleicher Weise können auch die Verbindungsstücke 1 und 2 variiert sein. EineTrennkante 22, die in Form einer umlaufenden Stufe den Steckteil 4 vom Muffenteil 5 trennt, ist bei diesen Ausführungsformen nicht umlaufend parallel zu den vorderen und hinteren Rändern des Kanalelements und somit nicht über ihre gesamte Länge rechtwinklig zur Strömungs- und Längsrichtung angelegt, sondern verläuft - bei der dargestellten Ausführung auf der größeren Rechteckseite - in Fig. 9 in einem Winkel von z.B. 5 Grad zur parallelen bzw. rechtwinkligen Linie, wie sie z.B. unter dem Bezugszeichen 22 in Fig. 1 eingezeichnet ist, oder in einem Winkel von ca. 85 Grad zur Längs-Seitenkante des Flachkanal-Elements. Hierdurch läßt sich in einer Richtung ein Bogen mit noch verkleinertem Radius bilden, in der anderen Richtung allerdings nur mit größerem Radius. Nach Fig. 10 führt eine Trennkante 23 von beiden Seiten her schräg zur Mitte der entsprechenden Kanalseiten, hat also auf dieser Seite einen dach- oder dreieckförmigen Verlauf, so dass die Möglichkeit des verkleinerten Bogenradiusses in beiden Biegerichtungen besteht.

Die Fig. 11 zeigt ein einziges Biegeelement 3 zwischen den beiden Verbindungsstücken 1 und 2. Die Verbindungsstücke weisen in ihrem Anschlussstück für den Anschluss der üblichen geraden starren Kanalelemente noch Verbindungshaken bzw. -ösen 16 auf, und außerdem für die Befestigung an einem Trägersubstrat, beispielsweise an einer Küchenmöbel-Oberseite oder auch an der Zimmerdecke, Befestigungslaschen 17, die später genauer beschrieben werden. An den Innenflächen der Elemente sind zum Ergreifen der gewellten Steckteile 4 schmale Stege 19 ausgebildet.

Fig. 12 veranschaulicht die Konstellation von Fig. 11 bei Anwendung auf einen kreiszylindrischen Rundkanal. Bei diesem ermöglichen die Biegeelemente 3 eine Verwinkelung nicht nur in zwei aufeinander senkrechten Winkeln, sondern in beliebiger Richtung zwischen waagrecht und senkrecht.

Fig. 13 zeigt das Verbindungsstück 1, das Biegelement 3 und das Verbindungsstück 2 im Längsschnitt für den Fall gewellter und damit besonders biegsamer Steckteile 4. Wie ersichtlich ist, enthält auch der Muffenteil 5 des Verbindungsstücks 1 den Ring-Hohlraum 7, und der Steckteil 4 des Verbindungsstücks 2 trägt die Einschübe 8.

Fig. 14 zeigt zwei unterschiedliche Ausführungen von Biegeelementen 3 insofern, als beim einen am Steckteil viele Vorsprünge 10, im Ring-Hohlraum des Muffenteils 4 aber nur zwei Vorsprünge 9 vorhanden sind, und beim anderen am Steckteil nur ein einziger Vorsprung 10, aber im Ring-Hohlraum axial gereiht mehrere Vorsprünge 9 vorhanden sind. Entweder die Vorsprünge 9 oder die Vorsprünge 10 oder beide sind in ihrem Umlauf unterbrochen, um zu ermöglichen, dass die Vorsprünge 9 sich auf der einen Kanalseite zwischen an axial anderer Stelle befindlichen Vorsprüngen 10 festsetzen als auf der gegenüberliegenden Kanalseite und so einen Winkel schaffen.

Die Fig.n 15 bis 17 zeigen nochmal genauer im Schnitt das Profil eines gewellten und mit einer Kette von Vorsprüngen 10 versehenen Steckteils 4 und des Ring-Hohlraums 7, in Fig. 15 - in Dickenrichtung maßstäblich etwas gedehnt - in voll ineinandergestecktem Zustand, in Fig. 16 am Biegelement 3 und in Fig. 17 am Außen-Verbindungsstück 1 dargestellt, letzteres mit zwei Vorsprüngen 9 an der Ring-Mündung des Ring-Hohlraums 7, die hier als umlaufende Rippen ausgeführt sind. An einer Einraststelle 18 setzt sich der Einschub 8 fest, wenn die Teile ganz zusammengeschoben sind.

Die Koppelelemente in Form des Einschubs 8 und des Ring-Hohlraums 7 sind nur eine von vielen Ausführungsmöglichkeiten. In der dargestellten Form bieten sie einen guten Halt, eine konstante Innenquerschnittsfläche über die gesamte Kanallänge und eine gute Dichtigkeit für das im Kanal transportierte Medium, sind aber nur mit aufwendigen Spritzgussformen herstellbar. Die Fig. 18 zeigt viele Beispiele von Koppelelementen jeweils anhand schematischer Längsschnitte durch eine der Kanalwände. Nach Fig. 18a hat der Einschub 8 aufeinanderfolgende Verdickungen, die zwischen schräge Klinken an der Hohlraum-Mündung eingeschoben werden. Nach Fig. 18b ist der Einschub zickzackwellenförmig mit wachsendem und schrumpfendem Durchmesser, was zugleich eine gewisse balgenartige Biegsamkeit dieses Steckteils, soweit er nicht im Ring-Hohlraum steckt, zur Folge hat und insofern die Bogenbildungsfähigkeit noch verbessert. Fig. 18c zeigt, anstelle der nach innen und außen gerichteten Verdickungen des Einschubs 8, nur nach innen gerichtete Vorsprünge, und in Fig. 18d ist die Ausführung dargestellt, dass sich am Einschub nach innen gerichtete und nach außen gerichtete Vorsprünge abwechseln.

Fig. 18e zeigt einen Einschub mit einer großen sechskantigen Verdickung am Ende und kleineren runden Noppen im Verlauf, und Fig. 18f einen Einschub mit periodisch wechselnder Wandstärke. Nach Fig. 18g ist der Einschub rund gewellt, wiederum mit der Folge einer balgenartigen zusätzlichen Biegsamkeit, und nach Fig. 18h hat er ein Sägezahnprofil mit einer Verstärkung in den äußeren Kanten. Der Einschub von Fig. 18i weist einwärtsgerichtete, und der von Fig. 18j auswärtsgerichtete Kerben auf, und nach Fig. 18k sind Rechteckkerben abwechselnd einwärts und auswärts gerichtet. Wie die Zeichnung zeigt, kommen auch für die Mündung des Muffenteils unterschiedliche Formgebungen in Frage, um den Steckteil in der montierten Form festzuhalten.

Fig. 181 zeigt am Steckteilende eine auswärtsgerichtete und am Muffenteilende eine einwärtsgerichtete Rippe, wobei beide Rippen an der Außen- bzw. Innenwand des anderen Teils anliegen und hierdurch eine gewisse Formbeständigkeit ergeben, aber doch ohne Arretierung bei entsprechendem Kraftaufwand verschiebbar sind. Die Verkoppelung der Teile, also das Überschieben der Rippe des Muffenteils über die Rippe des Steckteils, erfolgt durch elastische Verbiegung wenigstens eines der Teile, und ebenso können die Teile durch Verbiegung beispielsweise mittels Einschieben eines Schraubendrehers wieder entkoppelt werden. Diese in Fig. 181 angedeutete Ausführung hat den Vorteil einer relativ einfachen Herstellung.

Fig. 18m zeigt eine der Ausführung von Fig. 181 ähnliche Ausführung, jedoch mit zusätzlichen Vorsprüngen im Muffenteil, um eine eingestellte Winkeleinstellung formschlüssig festzuhalten. Nach Fig. 18n sind die Vorsprünge im Muffenteil als Wellenform gebildet, und Fig. 18o zeigt eine Ausführung, bei der die Vorsprünge am Steckteil sitzen, also, soweit sie eingesteckt sind, unsichtbar sind.

Fig. 18p zeigt eine im Vergleich zu Fig. 181 abgeänderte Ausführung mit im Querschnitt rechteckigen Rippen und einer Verdickung am Steckteil zur Begrenzung der Aufschubweite, und Fig. 18q schließlich zeigt wieder eine Ausführung mit Ring-Hohlraum, aber ohne die mehreren Vorsprünge von Fig. 14, so dass die Teile nur durch ihre Haftreibung in der eingestellten Winkellage gehalten werden oder gleitfähig bleiben sollen.

Sollen der Steckteil und der Muffenteil leicht wieder getrennt werden können, so kann die Ausführung von Fig. 19 empfehlenswert sein, bei der die Mündung des Muffenteils mit einer aufbiegbaren Lasche 20 versehen ist.

Zur Veranschaulichung der vielfältigen Einsatzmöglichkeit des Prinzips der koppelbaren Verbindungsstücke und Biegelemente zeigt Fig. 20 ein Übergangsstück von Flach- zu Rundkanal, bei dem für den Anschluss des Flachkanals - gegebenenfalls auch des Rundkanals, was aber in der Zeichnung nicht sichtbar ist - ein Muffenteil entsprechend dem Muffenteil 5 mit dem Ring-Hohlraum 7 vorgegeben ist. Fig. 21 zeigt ein T-Stück für den Anschluss von einem Rundkanal und zwei Flachkanälen; von den Flachkanalanschlüssen ist einer mit einem Deckel verschlossen und der andere ist ein Anschluss wiederum mit einem Muffenteil, an das in der dargestellten Ausführung Biegeelemente 3 angeschlossen sind. Fig. 22 zeigt ein langgestrecktes Flachkanalstück, das den Verbindungsstücken 1 und 2 entspricht und an seinen Enden einerseits einen Steckteil 4 und andererseits einen Muffenteil 5 trägt, die dort angespritzt oder befestigt, z. B. angeklebt sind. Solche Kanalstücke haben den Vorteil, billiger zu sein als eine Kette von Biegeelementen, die dann erst wieder in einem daran anschließenden Bogenbereich zum Einsatz kommen. Solche längeren starren Kanalstücke sind natürlich nicht auf Flachkanäle beschränkt, sondern werden auch bei anderen Kanalquerschnitten zur Überbrückung größerer linearer Strecken eingesetzt.

In Fig. 23 ist nochmal näher eine spezielle Ausführung der schematisch in Fig. 6 gezeigten Anschlussdose 14, worunter auch Stromverteilungskästen und dergleichen zu verstehen sind, gezeigt, mit daran angeschlossenen Leitungskanälen. Es handelt sich hier um ein Unterflurdosengehäuse, von der aus problemlos die Leitungskanäle auf dem fertigen Unterboden in jeder Richtung zu den Schreibtischen, Maschinen, Elektrogeräten usw. weitergeführt werden können. Das Unterflurdosengehäuse umfasst einen Dom 26 und eine Basis 27, an letzterer sind die Anschlussmöglichkeiten für die Kanäle geschaffen. Inseitig befindet sich in dem Gehäuse die jeweilige elektrische Installation, insbesondere eine Kabelverteilung und gegebenenfalls in nicht dargestellter Weise auf der Oberseite der Dose in ihrer oberen Abdeckplatte eine Anschlussdose. Es ist auch möglich, oberseits Kabelkanäle anzuschließen oder die Oberseite geschlossen zu lassen. Die Unterflurdose kann bei der Erstellung eines Betonbodens einfach auf dem Unterboden angeordnet, dort angeschlossen und dann einbetoniert werden, und sodann wird alles, was vom Dom 26 über den Beton-Fußboden ragt, spanabhebend entfernt. Der Dom 26, der in der dargestellten Ausführung zylindrisch , nämlich kreiszylindrisch ist, was insbesondere für kleinere Modelle zweckmäßig ist, kann aber auch z.B. ellipsenzylindrisch oder quaderförmig ausgeführt sein kann. Das Unterflurdosengehäuse geht unten an seiner Basis 27 in gerundeter Form, die den Kabeleinzug erleichtert, in Anschlusssockel 28 über, die als Muffenteile oder Steckteile für den Anschluss von Biegeelementen 3 ausgebildet sind. Die Anschlusssockel 28 sind bei einer Ausführung zunächst geschlossen, werden aber für den Anschluss von Kanälen aufgesägt, wozu Sägerillen vorgesehen sind. Zwischen den Anschlusssockeln 28 befindet sich eine Fläche 29, in die man Löcher für die Verlegung von Elektrorohren 30 bohren kann. Fußplatten 31, gegebenenfalls mit einem Befestigungsloch, dienen der Verankerung am Untergrund. Das Unterflurdosengehäuse ist für eine größere Zahl von Anschlusskanälen dargestellt, es sind jedoch auch kleinere Modelle möglich, für nur einen einzigen Anschlusskanal.

Fig. 24 zeigt, wie bei der dargestellten Ausführungsform der Steckteil aus dem Muffenteil herausgenommen und dadurch der Kanal geöffnet werden kann, nämlich durch Ansetzen eines Schraubendrehers oder eines ähnlichen Werkzeugs an durch die Pfeile 6 gekennzeichneten, neben den Pfeilen angebrachten Kerbungen, in die man den Schraubendreher hineindrückt und ihn dann etwas nach unten verdreht. Ist also in einem Kanal einmal ein Kanalelement schadhaft geworden und muß ersetzt werden, so kann man es einzeln herausnehmen und ersetzen, ohne den ganzen Kanal ausbauen zu müssen. Die Pfeile 6 geben für einen Luftkanal außerdem die bevorzugte Luftströmungsrichtung an, die deshalb bevorzugt wird, weil der Leckluftaustritt dann minimiert ist und das Kanalende so ohne weiteres an einen Mauerkasten anschließbar ist. Die genannte Öffnungsmöglichkeit ist aber nicht die einzige Möglichkeit, eine (nicht dargestellte) Alternative ist z.B. ein Loch in der Außenwand 7b, durch das man mit einem Stift hineindrückt.

Fig. 25 veranschaulicht das Ende eines gebogenen Elektrokabelkanals, das mit einem mit zwei Kabeldurchführungen versehenen Deckel abgeschlossen ist, und Fig. 26 die Befestigung von Laschen mit Kabelhaltern an den Kanalelementen, so dass beispielsweise ein Steuerungskabel 34 für einen Dachlüfter oder einen Separatraum-Ventilator mitgeführt werden kann.

Die Fig. 27 zeigt in zwei Ansichten das Verbindungsstück 1. Am Verbindungsstück 1 ist die Befestigungslasche 17 angebracht, mit deren Hilfe der Kanal an einem Trägersubstrat verankert werden kann, und zwar ist sie bei dieser Ausführungsform unmittelbar an das Verbindungsstück angespritzt, was eine feste Verbindung bei günstiger Herstellung ergibt. Sie steht vom Verbindungsstück 1 in einer Ebene ab, die rechtwinklig zur axialen Längsrichtung des Verbindungsstücks liegt.

Es ist aber auch eine lösbare und veränderliche Montage der Befestigungslasche am Kanalelement möglich, wie die Fig. 28 bis 33 zeigen. Beispielsweise können, wie Fig. 29 für einen Rundkanal veranschaulicht, mehrere, z.B. drei, Möglichkeiten der Anbringung der Befestigungslasche vorgesehen sein. Die einzelne Befestigungslasche 17 besteht, wie die Fig.n 30 und 31 zeigen, aus einem länglichen Streifen 40, an dessen Oberseite sich eine Reihe von etwa kugelkalottenförmigen Arretiernoppen 41 befinden, die über den Großteil der Länge des Streifens 40 verteilt sind. Die Arretiernoppen 41 sitzen nicht auf dem Streifen direkt, sondern auf einer entlang der Oberseite des Streifens 40 in dessen Längsrichtung verlaufenden Schiene 42, die einen trapezförmigen Querschnitt hat, mit der schmalen Grundlinie am Streifen 40 und der breiten Grundlinie an der Reihe der Noppen, deren Basisdurchmesser dem Maß der breiten Trapezgrundlinie gleicht. Der Streifen 40 mit der Schiene 42 kann flexibel sein, so dass er im Nichtgebrauch an die Wand des Verbindungsstücks angelegt werden kann, wie Fig. 27 zeigt, oder kann starr sein. Mit flexiblen Streifen für die Lasche 17 kann diese z.B. S-förmig gebogen unsichtbar hinter oder unter dem Kanal, der damit angeheftet ist, verlegt werden.

In der Wand des Muffenteils 5 des Verbinders befindet sich eine Nut 45 mit tangentialem Verlauf in Querrichtung, bezogen auf die axiale Längsrichtung des Teils 5, wie Fig. 33 für das Beispiel eines Rundkanals zeigt, und mit trapezförmigem Querschnitt, also eine Schwalbenschwanznut. Das Querschnittstrapez ist so dimensioniert, dass die Schiene 42 darin gleiten kann, jedoch nicht radial aus der Nut entweichen kann. Im Verlauf des Nutgrunds sind in der Wand des Muffenteils 5 Mulden 46 ausgebildet, die in Abstimmung auf die Noppen 41 so dimensioniert sind, dass die Noppen in die Mulden eingreifen und dann nicht mehr ohne elastische Verformung der Teile heraustreten, so dass sie also die Lage der Befestigungslasche 17 arretieren. Damit sie in die Mulden gelangen können, werden allerdings die Ränder der Nut 45 etwas aufgebogen. In der in Fig. 33 dargestellten Ausführung ist dies dadurch erleichtert, dass die beiden Mulden 46 sich etwa am Nutende befinden, wo aufgrund der Rundung der Muffenteil-Außenfläche die die Nut begrenzenden Wandteile von geringer Stärke sind. Die Zweizahl der Mulden ist aber nicht notwendig, die Nut könnte auch z. B. eine einzige Mulde oder drei Mulden an beliebigen Stellen der Nut aufweisen. Die beschriebene Gestaltung ermöglicht es, die Befestigungslasche in verschiedenen Stellungen am Muffenteil festzulegen, also entweder symmetrisch oder auf einer Seite länger und auf der anderen Seite kürzer vorstehend. Sie ermöglicht auch eine Befestigung des Kanalelements in einer Ecke, etwa als Dachrinnenrohr.

Die Befestigungslasche 17 weist an ihren beiden Enden Ösen 27 auf, mit deren Hilfe sie - und damit der Kanal - an einem Trägersubstrat wie z.B. einer Schrankoberseite befestigt werden kann. In der Zeichnung ist dargestellt, dass die Befestigungslasche 17 an den Verbindungsstücken 1 und 2 sitzt. Dies ist sinnvoll, da durch die Festlegung der beiden Verbindungsstücke der dazwischenliegende, aus einem oder mehreren Biegeelementen 3 bestehende Bogen optimal stabilisiert ist. Die Befestigungslaschen können aber grundsätzlich auch an Biegeelementen 3 oder auch an geradlinigen oder an beliebigen Kanalelementen des Elementensortiments angebracht sein, auch wenn keine flexiblen Bögen vorhanden sind.

Gemäß Fig. 34 und 35 sind einzelne oder alle Kanalelemente, in der dargestellten Konstellation die Biegeelemente 3 bzw. die Verbindungsstücke 1 und 2, mit Auflagepolstern 50 versehen, die an der Unterseite des betreffenden Elements in einer beliebig wählbaren Anzahl sitzen. Solche Auflagepolster können aber, ebenso wie die Befestigungslaschen, grundsätzlich an geradlinigen oder an beliebigen Kanalelementen des Elementensortiments angebracht sein, auch wenn keine flexiblen Bögen vorhanden sind. Sie dienen dazu, das Trägersubstrat gegen Lüftergeräusche und Vibrationen zu isolieren. Bei der Montage soll darauf geachtet werden, dass die Kanalelemente das Trägersubstrat an keiner Stelle direkt berühren, sondern nur über die puffernden Auflagepolster 50. Solche Auflagepolster können auch an der Unterseite der Befestigungslaschen 17 vorhanden sein, insbesondere wenn es sich um starre Befestigungslaschen handelt, wie in Fig. 29 gezeigt ist. Die Befestigungslaschen 17 weisen zum Einkleben der Auflagepolster 50 passende Vertiefungen 51 auf (Fig. 32).

Auch bei den erfindungsgemäßen Kanalelementen können an sich bekannte Luftleitkörper ("küche&bad", 1/2006) eingefügt werden, die den durchströmten Querschnitt in Teilquerschnitte aufteilen.

Besondere Kanalelemente, nämlich Kuppelmuffen für Rohrstücke ohne aufeinander abgestimmte Kupplungselemente, beispielsweise wenn bei den Kanalelementen nach Fig. 1 oder 2 zwei Muffenteile miteinander zu kuppeln sind, sind in den Fig.n 37 bis 41 gezeigt. Zwei Rohrstückenden 60 werden durch eine Kuppelmuffe 61 verbunden, die aus einem federnden, querschnittsmäßig auf den Kanalquerschnitt abgestimmten Ringkörper 62 besteht, der innen mit einem Belag 63 aus einer elastischen Dichtungsmasse belegt ist. Die Kuppelmuffe 61 soll die Rohrstückenden 60 dicht umklammern. Der Ringkörper 62 und der Belag 63 sind entlang einer Längslinie 64 aufgeschnitten, auf deren beiden Seiten zusammenwirkende Arretiermittel 65 angeordnet sind, die eine Verbindung der Ränder der Längslinie 64 ermöglichen, beispielsweise eine Hakenschiene und eine hierzu komplementäre hinterschnittene Nut. Bei der dargestellten Ausführung überlappen sich die Ränder der Längslinie 64 bzw. des Ringkörpers 62 in kleinem Ausmaß, wenn die Kuppelmuffe 61 zusammengedrückt und die Arretiermittel in Eingriff miteinander sind. Zum Verbinden werden nun nicht etwa, wie beim Stand der Technik, die Rohrstückenden von den beiden offenen Seiten her nur eingeschoben, sondern die Kuppelmuffe 61 wird hierzu aufgebogen (Fig. 37), so dass die Rohrstückenden 60 leicht hineingelegt werden können, und wird anschließend auf die Rohrstückenden gedrückt und mit Hilfe der Arretiermittel 65 geschlossen. Somit ist eine feste und dichte Verbindung hergestellt.

Fig. 39 zeigt insofern eine Abwandlung gegenüber der Ausführungsform von Fig. 37, als dort an zwei Seiten quer zur Kanal-Längsrichtung Sicken 66 gebildet sind, die im Innenraum der Kuppelmuffe als Steg vorstehen und das Einschieben der Rohrstückenden 60 begrenzen. Die Sicken 66 können, wie dargestellt, an zwei gegenüberliegenden Seiten gebildet sein, sie können aber auch rund um den Umfang ausgebildet sein. Schließlich kann auch eine einzige Sicke 66 an einer der Flachkanalseiten genügen.

Kuppelmuffen 61 können in gleicher Weise wie beim Flachkanal auch beim Rundkanal zur Anwendung kommen, eine entsprechende runde Kuppelmuffe ist in Vorderansicht in Fig. 40 gezeigt. Sofern dort Sicken 66 vorgesehen sind, können sie rundum, entlang einem Teil des Umfangs oder auch in Form von Noppenreihen punktweise angeordnet sein.

Gemäß einer in Fig. 41 dargestellten Abwandlung ist eine Kuppelmuffe 71 nicht nur in der Kanal-Längsrichtung an der Längslinie 64, sondern in ihrem federnden Ringkörper 72, bei der dargestellten Ausführung aber nicht im Belag 73, auch noch über einen Teil ihres Umfangs an einer Querlinie 74 aufgeschnitten. Der "Deckel" des Kupplungsstücks 71 besteht demnach aus zwei flügelartigen Teilen 77 und 78, die getrennt auffederbar sind, wobei der Belag 73 einer gewissen Dehnung ausgesetzt ist. Auch die Arretiermittel sind entsprechend den Teilen 77 und 78 zweigeteilt und getrennt zu schließen und zu öffnen. Die Ausführung nach Fig. 41 bietet den Vorteil, dass eines der Rohrstücke bereits mit auf sein Rohrstückende 60 montierter Kuppelmuffe 71 geliefert werden kann und der Kunde nur das andere Rohrstück mit seinem Ende 60 in die halb geöffnete Kuppelmuffe 71 einlegt, wie in der Zeichnung durch einen Pfeil angedeutet ist, und die Kuppelmuffe dann schließen muß.

## Patentansprüche

1. Zusammenfügbare Kanalelemente (1,2,3) zur Bildung eines geschlossenen Kanals zum Führen von Strömungsmedien, Kabeln u. dgl., jeweils bestehend aus einem Rohrstück (4+5) mit an wenigstens einem der axialen Endbereiche des Rohrstücks sitzenden Kupplungselementen (7,8), die eine Überlappung der gekuppelten Endbereiche aneinandergefügter Kanalelemente bewirken,
**dadurch gekennzeichnet, dass** die Kupplungselemente (7,8) eine Koppelung der Kanalelemente (1,2,3) unter um den Umfang der Rohrstücke (4+5) unterschiedlicher Überlappungsweite ermöglichen.

2. Kanalelemente nach Anspruch 1, **dadurch gekennzeichnet, dass** die Kupplungselemente am einen Endbereich des Rohrstücks nach außen vorstehende Riegel (10) und am anderen Endbereich des Rohrstücks nach innen vorstehende Riegel (9) sind und im gekuppelten Zustand die nach innen vorstehenden Riegel die nach außen vorstehenden Riegel des benachbarten Kanalelements (1,2,3) hintergreifen, wobei die Kupplungselemente (1,2,3) durch elastische Verformung wenigstens von einem ihrer Rohrstücke (4+5) in den hintergriffenen Zustand bringbar sind.

3. Kanalelemente nach Anspruch 1, **dadurch gekennzeichnet, dass** die Kupplungselemente am einen Endbereich des Rohrstücks nach außen oder innen vorstehende Klinken (10) und am anderen Endbereich des Rohrstücks nach innen bzw. außen offene Mulden (9a) sind und im gekuppelten Zustand die vorstehenden Klinken in die Mulden des benachbarten Kanalelements (1,2,3) eingreifen, wobei die Kupplungselemente (1,2,3) durch elastische Verformung wenigstens von einem ihrer Rohrstücke (4+5) oder Klinken in den Eingriff-Zustand bringbar sind.

4. Kanalelemente nach einem der Ansprüche 1 bis 3, **dadurch gekennzeichnet, dass** die Kupplungselemente einerseits an einem vom Ende des Rohrstücks (4+5) innerhalb von dessen Wandstärke axial verlaufenden Ring-Hohlraum (7) und andererseits wenigstens an einem vom Endbereich des Rohrstücks axial vorstehenden, in den Ring-Hohlraum des benachbarten Kanalelements einsteckbaren Einschubvorsprung (8) sitzen, wobei der Ring-Hohlraum (7), ihn radial begrenzend, eine Außenwand (7b) und eine Innenwand (7a) hat und die Außenwand zumindest entlang einem Teil des Umfangs, der beim gekrümmten Zusammenbau im Bereich der Bogen-Innenseite liegt, in axialer Längsrichtung kürzer als die Innenwand an dieser Stelle ist.

5. Kanalelemente nach einem der Ansprüche 1 bis 4, **dadurch gekennzeichnet, dass** ihr Rohrstück einen Steckteil (4) und einen Muffenteil (5) umfasst, in die das Rohrstück axial unterteilt ist, wobei der Muffenteil (5) einen Innenquerschnitt hat, der größer ist als der Außenquerschnitt des Steckteils (4).

6. Kanalelemente nach Anspruch 5, **dadurch gekennzeichnet, dass** das Rohrstück (4+5) zwischen dem Steckteil und dem Muffenteil einen starren Kanalteil enthält.

7. Kanalelemente nach einem der Ansprüche 1 bis 6, **dadurch gekennzeichnet, dass** an der Unterseite zumindest einiger der Kanalelemente Rollen angebracht sind.

8. Kanalelement nach einem der Ansprüche 1 bis 7, **dadurch gekennzeichnet, dass** eine die Überlappungsweite der Kanalelemente (1,2,3) begrenzende, am jeweiligen Kanalelement gebildete stufenartige Trennkante (22,23) zumindest über eine Teil des Umfangs des Kanalelements in einem Winkel in der Größenordnung von 88 bis 75, vorzugsweise von 85 Grad zur Längsrichtung des Kanalelements verläuft.

9. Kanalelemente nach einem der Ansprüche 1 bis 8, **dadurch gekennzeichnet, dass** am Umfang des einzelnen Rohrstücks eine Befestigungslasche (17) für die Befestigung an einem Trägersubstrat angebracht ist.

10. Kanalelemente nach einem der Ansprüche 1 bis 9, **dadurch gekennzeichnet, dass** am Umfang des einzelnen Rohrstücks ein Befestigungselement (45,46) zum Ankoppeln einer Befestigungslasche (17) in Form eines länglichen Streifens, der entlang seiner Länge mehrere Punkte (41) zum wahlweisen Ankoppeln am Befestigungselement (45,46) des Kanalelements hat, für die Befestigung an einem Trägersubstrat angebracht ist.

11. Kanalelemente nach Anspruch 10, **dadurch gekennzeichnet, dass** in der Wand des Rohrstücks eine im Querschnitt schwalbenschwanzförmige Nut (45) gebildet ist, die tangential in der Wand des Rohrstück verläuft und in die die Befestigungslasche (17) lösbar eingesetzt ist.

12. Kanalelemente nach einem der Ansprüche 1 bis 11, **dadurch gekennzeichnet, dass** am einzelnen Kanalelement (1,2,3) außen die Schallübertragung zur Unterlage dämpfende Auflagepolster (50) angebracht sind.

13. Kanalelemente nach einem der Ansprüche 1 bis 12, **dadurch gekennzeichnet, dass** wenigstens eines der Rohrstücke einer Kanalinstallation in einem Bereich beiderseits eines quer zur Strömungsrichtung im Kanal liegenden Rohrquerschnitts aus einem schalldämmenden Material besteht.

14. Kanalelemente nach einem der Ansprüche 1 bis 13, **dadurch gekennzeichnet, dass** eine dem Umfang der Rohrstücke angepasste Kuppelmuffe (61,71) zum Koppeln zweier Rohrstücke aus einem federnden Material besteht, entlang einer Längslinie (64) geteilt ist und auffederbar und im zusammengedrückten Zustand gegen ein Auffedern arretierbar ist.

15. Kanalelemente nach Anspruch 14, **dadurch gekennzeichnet, dass** der auffedernde Umfangsbereich der Kuppelmuffe (71) in seinem Mittelbereich in seiner Querrichtung durchschnitten (74) und **dadurch** in zwei getrennt auffederbare Flügel (77,78) getrennt ist.

16. Kanalelemente nach einem der Ansprüche 1 bis 15, **dadurch gekennzeichnet, dass** ein Sortiment für eine Kanalmontage folgende Elemente umfasst: starre gerade Kanalelemente, Biegeelemente (3) mit mit unterschiedlicher Überlappungsweite kuppelbaren Kuppelelementen (7,8), Verbindungsstücke (1,2) zwischen den geraden starren Kanalelementen und den Biegeelementen.

17. Kanalelemente nach dem auf Anspruch 5 rückbezogenen Anspruch 16, **dadurch gekennzeichnet, dass** das Sortiment zwei Arten von Verbindungsstücken (1,2) umfasst, nämlich solche (1) mit einem Muffenteil (5) zum Anschließen des Steckteils (4) eines Biegeelements (3), und solche mit einem Steckteil (4) zum Anschließen des Muffenteils (5) eines Biegelements (3), und starre Kanalelemente umfasst, die an ihren offenen Enden jeweils einerseits einen Steckteil und andererseits einen Muffenteil tragen.

18. Kanalelemente nach einem der Ansprüche 1 bis 17, **dadurch gekennzeichnet, dass** das Sortiment wenigstens ein Kanalelement (14) enthält, dessen an die Kupplungselemente anschließendes Rohrstück ein in einem Betonkörper einzubettendes Gehäuse für eine elektrische Installation ist.
